# EUROPEAN PATENT APPLICATION

(11) **EP 1 475 654 A1**
(43) Date of publication of application: **10.11.2004**
(21) Application number: 04076185.0
(22) Date of filing: 19.04.2004
(51) Int. Cl.: G02F 1/1343

(54) **A segmented display addressable in matrix fashion and having positive and negative display modes**

(30) Priority: 30.04.2003 US 426539
(71) Applicant: EASTMAN KODAK COMPANY, Rochester, New York 14650 (US)
(72) Inventor: Mi, Xiang-Dong, c/o Eastman Kodak Company, Rochester, New York 14650-2201 (US); Stephenson, Stanley W., c/o Eastman Kodak Company, Rochester, New York 14650-2201 (US)
(74) Representative: Haile, Helen Cynthia

(57) **Abstract**

A display having a display area capable of displaying a plurality of characters in a background, the characters including a plurality of segments, comprising : a substrate (15); a first patterned conductor layer (10) on the substrate having electrically separate areas defining character regions, the first patterned conductor being substantially coextensive with the display area; a layer of light modulating material (20) over the first patterned conductor layer; a second patterned conductor layer (30) over the layer of light modulating material and having electrically separate areas defining the segments of the characters and the background, the second patterned conductor being substantially coextensive with the display area; a dielectric layer (120) over the second patterned conductor layer, the dielectric layer defining holes (72) over each segment and the background area of the second patterned conductor layer; and a third patterned conductor layer (112) located over the dielectric layer defining a plurality of conductors connected to the areas defining the character segments in the second patterned conductor and the background area through the holes in the dielectric layer; at least one of the conductors being connected to a segment in more than one character, whereby the display may be addressed in a matrix fashion by electrically addressing the first and second plurality of contacts, and may be driven in a positive or negative mode.

## Description

The present invention relates to a display having two operation modes addressable by a passive matrix, more particularly, it relates to cholesteric (chiral nematic) liquid crystal displays and their electrical drive schemes, and to segmented display having at least two operation modes.

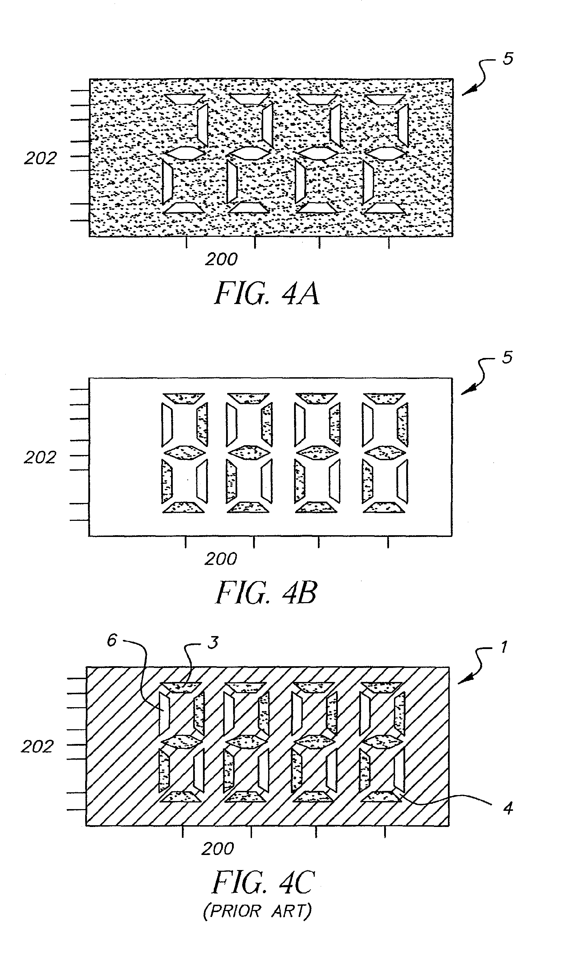

Referring to Fig. 4C, a prior art segmented display **1** includes segmented areas that can be written to an ON state such as the segment **6** or OFF state like the segment 3. Because there are no electrodes across the non-segmented areas **4**, the non-segmented areas **4** are not addressable. The non-segmented areas **4** appear different than the segmented areas whether the segmented areas are in an ON or OFF state. This causes an undesired image on the display **1**.

US 5,636,044 issued June 3, 1997 to Yuan et al. discloses a segmented display using cholesteric liquid crystals, which has two substrates. The first substrate is divided into segmented and non-segmented areas which are defined by a gap in the electrode materials disposed on the substrate. The second substrate is divided into common electrodes corresponding to the segmented and non-segmented areas on the first substrate. This device can change the state of the segmented areas as well as non-segmented areas, thus it allows the display of a positive or negative image. However, this device is not matrix driven, therefore, it has too many lead electrodes, which limits its application. For example, to display a 4 digit 7-segmented image, the first substrate has to have 28 leads. For an 8 digit 7-segmented image, the first substrate has to have 56 leads.

US 6,323,928 B1 issued November 27, 2001 to Petruchik discloses a segmented display using cholesteric liquid crystals, which has one substrate. The substrate having the first electrode is divided into digit areas by a gap in the electrode materials disposed on the substrate. The second segmented electrode is printed on a layer of cholesteric liquid crystal. Then a layer of dielectric material is deposited on top of the segmented electrodes with vial-holes. Finally another layer of conductor is deposited over the dielectric layer to form column electrodes which connect corresponding segments in different digits. This device is addressable in a passive matrix fashion. To show an 8 digit 7-segmented image, the total number of leads is 15. The appearance of non-segmented areas can be colored to match the appearance of segmented areas. However, this device can show only one type of image because non-segmented areas are not switchable between states.

There is a need for a display capable of showing two operation modes, or positive and negative modes, yet addressable in matrix fashion, particularly in passive matrix fashion.

The need is met according to the present invention by providing a method of making a display having a display area capable of displaying a plurality of characters in a background, the characters including a plurality of segments that includes the steps of: providing a substrate; forming a first patterned conductor layer on the substrate having electrically separate areas defining character regions, the first patterned conductor being substantially coextensive with the display area; depositing a layer of light modulating material over the first patterned conductor layer; forming a second patterned conductor layer over the layer of light modulating material and having electrically separate areas defining the segments of the characters and the background, the second patterned conductor being substantially coextensive with the display area; depositing a dielectric layer over the second patterned conductor layer, the dielectric layer defining holes over each segment and the background area of the second patterned conductor layer; and forming a third patterned conductor layer located over the dielectric layer defining a plurality of conductors connected to the areas defining the character segments in the second patterned conductor and the background area through the holes in the dielectric layer; at least one of the conductors being connected to a segment in more than one character, whereby the display may be addressed in a matrix fashion by electrically addressing the first and second plurality of contacts, and may be driven in a positive or negative mode.

The invention has the advantage of displaying at least two operation modes and reducing shades of the segmented and non-segmented areas with a passive matrix addressing method.
Fig. 1A is a top view of a first patterned conductor layer of a display according to the present invention;
Fig. 1B is a top view of a layer of light modulating material located over the first patterned conductor layer of the display of Fig. 1A;
Fig. 1C is a top view of a second patterned conductor layer over the layer of light modulating material of the display of Fig. 1B;
Fig. 1D is a top view of a patterned dielectric layer deposited over the second patterned conductor layer of the display of Fig. 1C;
Fig. 1E is a top view of a third patterned conductor layer located over the dielectric layer of the display of Fig. 1D;
Fig. 1F is a top view of the segment electrodes shown in Fig. 1C;
Fig. 2A is a cross sectional view of the display of Fig. 1A taken along line 2-2;
Fig. 2B is a cross sectional view of the display of Fig. 1B taken along line 2-2;
Fig. 2C is a cross sectional view of the display of Fig. 1C taken along line 2-2
Fig. 2D is a cross sectional view of the display of Fig. 1D taken along line 2-2;
Fig. 2E is a cross sectional view of the display of Fig. 1E taken along line 2-2;
Fig. 3A is a top view of an alternative second patterned conductor over the layer of light modulating material of the display of Fig. 1B;
Fig. 3B is a top view of a patterned dielectric layer deposited over the second patterned conductor of the display of Fig. 3A;
Fig. 3C is a top view of a third patterned conductor layer deposited over the dielectric layer of the display of Fig. 3B;
Fig. 3D is a top view of the segment electrodes of Fig. 3A;
Fig. 4A is a top view of a display according to the present invention driven in a first mode viewed from the substrate side;
Fig. 4B is a top view of the display of Fig. 4A operated in a second mode; and
Fig. 4C is a top view of a prior art display.

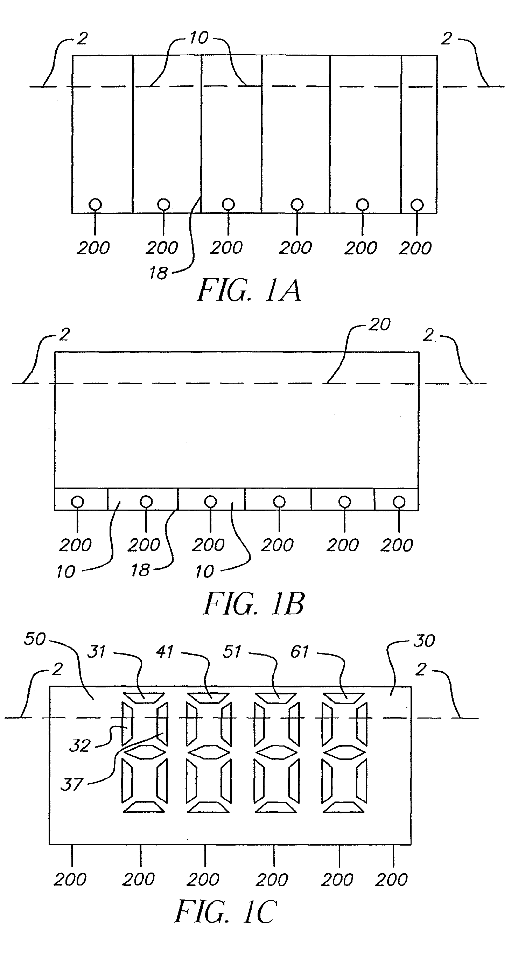

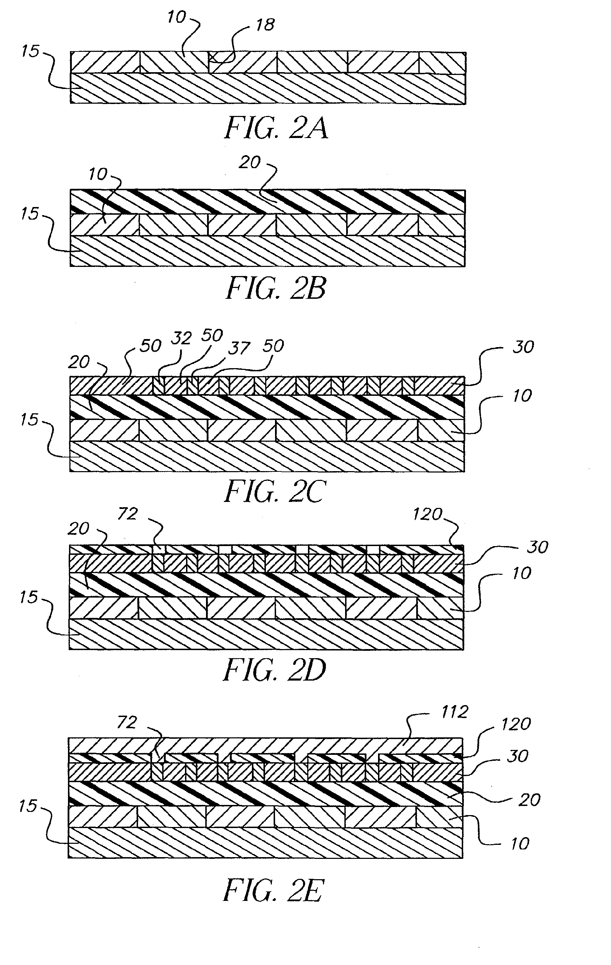

A first method of forming a display according to the present invention is described referring to Fig. 1A through Fig. 2E. Fig. 1A is a top view of a first patterned conductor layer **10** of a display according to the invention. As shown in Fig. 2A, the display includes a substrate **15,** which can be a thin transparent polymeric material, such as Kodak Estar™ film base formed of polyester plastic that has a thickness of between 20 and 200 microns.

In one embodiment, the substrate **15** can be a 125 micron thick sheet of polyester film base. Other polymers, such as transparent polycarbonate, can also be used. Electrodes in the form of first patterned conductors **10** are formed over the substrate. The first conductor **10** can be tin-oxide or indium-tin-oxide (ITO), with ITO being the preferred material. Typically, the material of first conductors is sputtered as a layer over the substrate having a resistance of less than 250 ohms per square. Alternatively, first patterned conductors **10** can be an organic conductive polymer such as polythiophene, or an opaque electrical conductor material such as copper, aluminum, or nickel. The first conductor layer is then patterned to form first patterned conductors **10** in conventional photolithographic or laser etching means or any well known manner. The first patterned conductor layer **10** has electrically separate areas **18** defining character regions. The first patterned conductor layer **10** is substantially coextensive with the display area with only fine lines between segments that are not covered by the conductor layer **10**. A first plurality of contacts **200** for making electrical contact to each of the character regions in the first patterned conductor layer are electrically connected to first patterned conductors **10,**

Referring to Fig. 1B, a light modulating material such as a polymer dispersed cholesteric (or chiral nematic) dispersed cholesteric liquid crystal light modulating layer **20** overlays first patterned conductor layer **10.** In an exemplary embodiment, the polymer dispersed cholesteric light modulating layer **20** includes a polymeric host material and dispersed cholesteric liquid crystal materials, such as those disclosed in US 5,695,682 issued December 9, 1997 to Doane et al., the disclosure of which is incorporated by reference. Application of electrical fields of various amplitude and duration can drive a chiral nematic material into a reflective state, a transmissive state, or an intermediate state. These cholesteric materials have the advantage of maintaining a given state indefinitely after the field is removed. Cholesteric liquid crystal materials can be Merck BL112, BL118 or BL126, available from E.M. Industries of Hawthorne, NY.

In the exemplary embodiment, the polymeric host material is provided by E.M. Industries cholesteric material BL-118 dispersed in deionized photographic gelatin. The liquid crystal material is dispersed at 8% concentration in a 5% deionized gelatin aqueous solution. The mixture is dispersed to create 10 micron diameter domains of the liquid crystal in aqueous suspension. The material is coated over a patterned ITO polyester sheet to provide a 7 micron thick polymer dispersed cholesteric coating. Other organic binders such as polyvinyl alcohol (PVA) or polyethylene oxide (PEO) can be used. Such compounds are machine coatable on equipment associated with photographic films.

Fig. 1C shows that electrodes in the form of second patterned conductor layer **30** overlay polymer light modulating layer **20**. Second patterned conductor layer **30** should have sufficient conductivity to establish an electric field across polymer light modulating layer **20.** Second patterned conductor layer **30** can be formed in a vacuum environment using materials such as aluminum, silver, platinum, carbon, tungsten, molybdenum, tin, or indium or combinations thereof. The second patterned conductor layer **30** are as shown in the form of a deposited layer. Oxides of the metals can be used to darken second patterned conductor layer **30**. Tin-oxide or indium-tin-oxide coatings permit second patterned conductor layer **30** to be transparent.

Electrodes **10** and **50, 31, 32, 33, 34, 35, 36, 37, 41, 51, 61** are on opposite sides of the light modulating layer **20** and are arranged in rows and columns, respectively, so that the intersection of a row and column defines areas for applying an electric field across the light modulating layer **20** when a voltage is applied to the electrodes.

In one embodiment, second patterned conductor layer **30** is printed conductive ink such as Electrodag 423SS screen printable electrical conductive material from Acheson Corporation. Such printed materials are finely divided graphite particles in a thermoplastic resin.

In this embodiment, the second patterned conductor layer 30 has electrically separate areas defining the segments of the characters and the background, and is substantially coextensive with the display area. Fig. 1F shows the segment electrodes **31, 32, 33, 34, 35, 36, 37** of a 7-segment character, which corresponds to the left most character of Fig. 1C. In Fig. 1C, the segment electrodes **41, 51**, and **61** of the other characters correspond to the segment electrode **31** of the left most character. Although the four characters shown in Fig, 1 C have the same form (i.e. a standard 7-segment numeric character), they may adopt different segmented forms, such as alphanumeric characters, Chinese characters, or other special purpose icons. The background area or the non-segmented area is a single electrically connected area, connected to a background electrode 50.

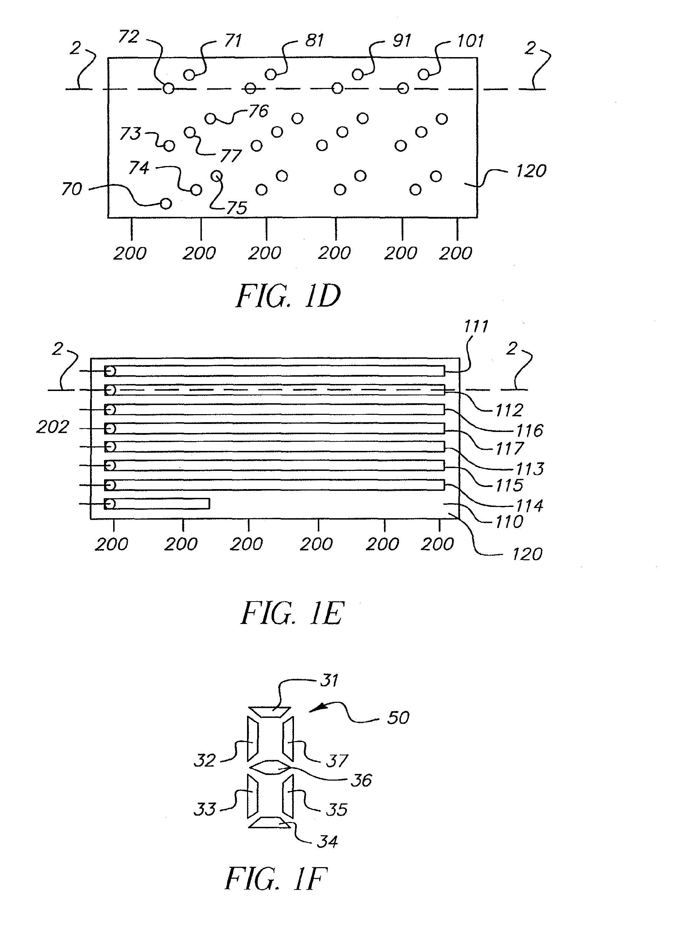

Fig. 1D shows a dielectric layer **120** deposited over the second patterned conductor layer **30**. The dielectric layer **120** has a plurality of vial holes. The vial holes **71, 72, 73, 74, 75, 76, 77, 81, 91**, and **101** enable electrical connection to segment electrodes **31, 32, 33, 34, 35, 36, 37, 41, 51**, and **61,** respectively. The vial hole **70** enables electrical connection to the background electrode **50.** Additional vial holes may enable electrical connection to the first patterned conductors **10**. The dielectric layer **120** is a nonconductive polymer such as Electrodag 1015 screen printable UV curable dielectric material from Acheson Corporation.

Fig. 1E shows a third patterned conductor layer deposited over the dielectric layer **120.** The third patterned conductor layer has a plurality of conductors **111, 112,113,114,115,116,** and **117** which are connected to all segment electrodes of the second patterned conductors through the vial holes. Specifically, the conductor **111** connects the segment electrode **31, 41, 51**, and **61** through vial holes **71, 81, 91,** and **101,** respectively. Likewise, the conductor **112** connects the segment electrode **32** of the first character and its counter part of the other characters. The third patterned conductor layer also has a conductor **110** which is connected to the background electrode **50** of the second patterned conductors through the vial hole **70**. The third patterned conductor layer may or may not have conductors that are connected to the first patterned conductors through additional vial holes.

Preferably, the third patterned conductor layer is printed conductive ink such as Electrodag 423SS screen printable electrical conductive material from Acheson Corporation. Such printed materials are finely divided graphite particles in a thermoplastic resin. Alternatively, the third patterned conductor layer can be silver, aluminum, ITO, or other electrically conductive materials.

A second plurality of contacts **202** for making electrical contact with the conductors in the third patterned conductor layer are connected to segment and background electrodes of the second patterned conductors.

The display may be addressed in a positive or negative mode. In the positive mode the characters are dark and the background is light; in the negative mode, the characters are light and the background is dark.

Figs. 2A, 2B, 2C, 2D, and 2E are cross sectional views of Figs. 1A, 1B, 1C, 1D, and 1E, respectively, along a line **2-2.**

According to the first embodiment, the background area is a single electrically connected area 50. Thus it has an advantage of having a minimum number of electrical contacts. However, a fine line to electrically separate segments may be difficult in some situations.

According to a second embodiment, the background area is divided into a plurality of electrically separated areas that are electrically connected by a conductor in the third conductor layer. This embodiment overcomes a problem of the first embodiment while adding only a small number of additional electrical contacts.

As in the first embodiment, a first patterned conductor layer **10** is formed on a substrate **15** as shown in Figs. 1A and 2A. A layer of light modulating material such as a polymer light modulating layer 20 then overlays first patterned conductor layer **10** as shown in Figs. 1B and 2B.

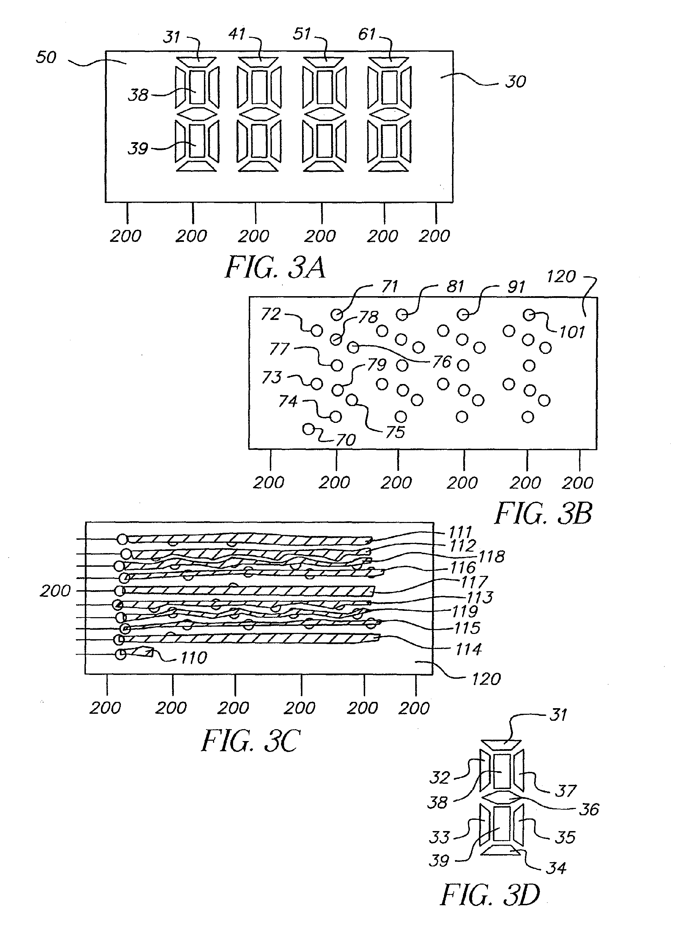

Referring to Fig. 3A, the second patterned conductor layer **30** differs from that in Fig. 1C. The background area comprises a plurality of electrically separated areas. Fig. 3D shows the segment electrodes 31, 32, 33, 34, **35,36,37** of a 7-segment character, and background electrodes **38** and **39,** which are electrically separated from common background electrode **50** shown in Fig, 3A.

A dielectric layer **120** is deposited over the second patterned conductor layer **30** with the same vial holes **71, 72, 73, 74, 75, 76, 77, 81, 91**, and **101** as shown in Fig. 1D that enable electrical connection to segment electrodes **31, 32, 33, 34, 35, 36, 37, 41, 51,** and **61,** respectively. The vial hole **70** enables electrical connection to common background electrode **50**. Compared to Fig. 1D, additional vial holes **78** and **79** are formed over background electrode 38 and 39, respectively.

Fig. 3C is the counterpart of Fig. 1E, showing the third patterned conductor layer formed over the dielectric layer **120**. The third patterned conductor layer has a plurality of conductors connected to the areas defining the character segments in the second patterned conductor and the background area through the holes in the dielectric layer; at least one of the conductors being connected to a segment in more than one character. The conductors **111** through **117** are connected to the areas defining the character segments, the conductors **110, 118**, and **119** are connected to the background area through the vial holes **70**, **78**, and **79**, respectively.

Fig. 4A shows the appearance of a 4 digit 7-segmented display **5** made according to the first method of the invention that is driven in a negative mode. Fig. 4B shows the same display shown in Fig. 4A driven in a positive mode. In both cases, the segmented areas and background areas are all electrically addressable in a matrix fashion. This display has 12 electrical leads. For an 8 digit 7-segmented display made according to the first method of the invention, the total number of electrical leads is 16. The display can be addressed using any known driving methods such as conventional drive methods (see, for example US 5,251,048 issued October 5, 1993 to Doane et al.) or dynamic drive methods (see for example US 5,748,277 issued May 5, 1998 to Huang et al.).

The display formed using these methods can be used, for example, as inexpensive electronically writable tags for retail sales.

## Claims

1. A display having a display area capable of displaying a plurality of characters in a background, the characters including a plurality of segments, comprising:
a) a first patterned conductor layer having electrically separate areas defining character regions, the first patterned conductor being substantially coextensive with the display area;
b) a first plurality of contacts for making electrical contact to each of the character regions in the first patterned conductor layer;
c) a layer of light modulating material located over the first patterned conductor layer;
d) a second patterned conductor layer located over the layer of light modulating material and having electrically separate areas defining the segments of the characters and the background, the second patterned conductor being substantially coextensive with the display area;
e) a dielectric layer located over the second patterned conductor layer, the dielectric layer defining holes over each segment and the background area of the second patterned conductor layer;
f) a third patterned conductor layer located over the dielectric layer defining a plurality of conductors connected to the areas defining the character segments in the second patterned conductor and the background area through the holes in the dielectric layer; at least one of the conductors being connected to a segment in more than one character; and
g) a second plurality of contacts for making electrical contact with the conductors in the third patterned conductor layer, whereby the display may be addressed in a matrix fashion by electrically addressing the first and second plurality of contacts, and may be driven in a positive or negative mode.
